# EUROPÄISCHE PATENTSCHRIFT

(11) **EP 2 460 207 B1**
(45) Veröffentlichungstag und Bekanntmachung des Hinweises auf die Patenterteilung: **09.09.2015**
(21) Anmeldenummer: 10730723.3
(22) Anmeldetag: 03.07.2010
(51) Int. Cl.: H01M 2/02, H01M 2/12, H01M 10/052, H01M 10/0525

(54) **GALVANISCHE ZELLE MIT ÜBERDRUCKSICHERUNG**
GALVANIC ELEMENT WITH PRESSURE-RELIEF VALVE
ÉLÉMENT GALVANIQUE AVEC SOUPAPE DE SURPRESSION

(30) Priorität: 31.07.2009 DE 102009035457
(43) Veröffentlichungstag der Anmeldung: 06.06.2012
(73) Patentinhaber: Daimler AG, 70327 Stuttgart (DE)
(72) Erfinder: SCHRÖTER, Dirk, 71364 Winnenden (DE); MEINTSCHEL, Jens, 02994 Bernsdorf (DE); LAMM, Arnold, 89275 Elchingen (DE)
(74) Vertreter: JENSEN & SON
(86) Internationale Anmeldenummer: PCT/EP2010/004048
(87) Internationale Veröffentlichungsnummer: WO 2011/012208

(56) Entgegenhaltungen:
- EP-A1- 0 924 779
- EP-A1- 1 898 480
- DE-A1- 3 500 401
- DE-A1-102007 063 188
- DE-A1-102007 063 193
- US-A- 4 929 518

## Beschreibung

Die Erfindung betrifft eine Einzelzelle für eine Batterie nach den Merkmalen des Oberbegriffs des Anspruchs 1, eine Batterie nach den Merkmalen des Oberbegriffs des Anspruchs 12 und ein Verfahren zur Herstellung eines Gehäuserahmens mit einer Ventingöffnung zur Verwendung in einer Einzelzelle nach den Merkmalen des Oberbegriffs des Anspruchs 13, wie es bspw. aus der gattungsbildend zugrunde gelegten DE 35 300 401 A1 als bekannt hervorgeht.

Aus der aus der gattungsbildend zugrunde gelegten DE 35 00 401 A1 ist Einzelzelle mit einem aus einem ersten Gehäuseseitenteil und einem zweiten Gehäusesteil sowie einem Gehäuserahmen gebildeten Gehäuse bekannt. Innerhalb des Gehäuses ist ein Elektrolyt und eine elektrochemisch aktive Elektrodeneinheit angeordnet, welche Elektrodeneinheit von einer Elektrodenfolieneinheit gebildet wird. Das Gehäuse weist eine Überdrucksicherung auf. Das erste Gehäuseseitenteil ist mit einem zumindest abschnittsweise über eine Länge der Einzelzelle hinausgehenden Gehäuseseitenteilsegment versehen, welches gegenüber dem ersten Gehäuseseitenteil in Richtung des Zellinneren abgewinkelt ist, wobei in ihm ferner zusätzlich die Überdrucksicherung (4) angeordnet ist. Des Weiteren ist in einem seitlichen Bereich des Gehäuses und der Überdrucksicherung (4) eine Ventingöffnung (11) eingebracht.

Aus der EP 1898 480 A1 ist eine sogenannte pouch-Zelle bekannt bei der eine elektrochemisch aktive Elektrodenfolieneinheit innerhalb zweier metallisch laminierter Plastikfolien angeordnet ist. Zur Bildung des Zellenbehälters (-gehäuses) sind die Folien entlang ihren über die Elektrodenfolieneinheit seitlich hinausragenden, durchgehenden Seitenbereichen mit einander insbesondere gasdicht verbunden, wobei die Pole durch diese Seitenbereiche dichtend und elektrisch isoliert hindurchgeführt sind. Zur Verbesserung der Sicherheit ist in den Seitenbereichen ferner eine Schwächung angeordnet, die im Falle eines Überdrucks im Zellinnern aufbricht und derart als Ventingöffnung dient.

Aus der EP 924 779 A1 ist eine Einzelzelle mit einem aus einem ersten und einem zweiten Gehäusesteil bekannt. Innerhalb des Gehäuses ist ein Elektrolyt und eine elektrochemisch aktive Elektrodeneinheit angeordnet, welche Elektrodeneinheit von einer Elektrodenfolieneinheit gebildet wird. Die Pole der Einzelzelle sind randseitig aus dem Gehäuse herausgeführt.

Aus dem Stand der Technik ist, wie in der EP 0 266 541 A1 beschrieben, eine Explosionsschutz-Anordnung für eine nichtwässrige elektrochemische Batterie und ein Verfahren zu ihrer Herstellung bekannt. In einer nichtwässrigen elektrochemischen Batterie sind am Boden des Batteriebehälters eine Mehrzahl Rillen ausgeformt, in welchen eine Materialstärke des Bodens des Batteriebehälters reduziert ist. Die Rillen schneiden sich in zumindest einem Punkt und ein Bodenbereich der Rillen ist flach ausgeformt, so dass die explosionsgeschützte Anordnung bei einem vorgegebenen Innendruck der Batterie auslösbar ist.

In der EP 1 321 993 A2 werden ein Batteriezellen-Sicherheitsventil und eine damit ausgerüstete Batterie beschrieben. Eine Batteriezelle umfasst eine positive Elektrode, eine negative Elektrode, eine Elektrolytlösung und eine Hülle. Die Hülle umfasst eine Ventilplatte, eine ringförmig ausgeformte Sollbruchstelle auf der Ventilplatte und ein oder mehrere Hilfs-Sollbruchstellen in einem von der ringförmig ausgeformten Sollbruchstelle umschlossenen Bereich. Die Hilfs-Sollbruchstelle ist derart ausgeformt, dass eine verbleibende Dicke der Ventilplatte im Bereich der Hilfs-Sollbruchstelle größer ist als im Bereich der ringförmigen Sollbruchstelle. Zumindest ein Ende der Hilfs-Sollbruchstelle ist verbunden mit der ringförmigen Sollbruchstelle. Ist eine derartige Ventilplatte als Sicherheitsventil in eine Batteriezelle integriert, funktioniert das Sicherheitsventil leichtgängig und lässt ein sich in der Batteriezelle bildendes Gas schnell ausströmen.

Aus der US 5,688,615 sind eine Bipolarbatterie und ein Verfahren zu ihrer Herstellung bekannt. Die Bipolarbatterie umfasst ein Gehäuse, welches Befüllungsöffnungen zum Einfüllen von Elektrolyt aufweist, die beispielsweise in einem Gehäuserahmen des Gehäuses angeordnet sind. Das Gehäuse kann vollständig verschlossen oder entlüftbar sein.

In der US 7,122,276 B2 ist eine Flachzelle mit einem Sicherheitsventil beschrieben. Die Flachzelle weist ein Sicherheitsventil auf, welches bei einer steigenden Innentemperatur durch ein Überladen, ein zu starkes Entladen oder eine Überhitzung eine Explosion oder ein Feuer aufgrund eines zu starken Zellinnendrucks durch Auslösen eines Öffnungsmechanismus am Gehäuse der Flachzelle verhindert. Dazu ist zumindest ein Öffnungsteil an einer Verschlussstelle der Flachzelle angeordnet, wobei das Öffnungsteil, welches aus einem Kunstharz gefertigt ist, einen geringeren Schmelzpunkt aufweist als die Verschlussstelle der Flachzelle.

Aus der WO 94/10708 ist eine Batterieanordnung bekannt, welche ein Ventil umfasst. Ein Einweg-Ventil ist in eine Schutzhülle integriert, welche einen Folienstapel umgibt. Nachdem die Schutzhülle verschlossen ist, wird die Batterieanordnung über das Ventil vakuumiert. Ist ein Druck innerhalb der Schutzhülle höher als außerhalb der Schutzhülle, strömen Gase und Flüssigkeiten aus der Schutzhülle über das Ventil nach außen ab.

Der Erfindung liegt die Aufgabe zugrunde, eine verbesserte Einzelzelle für eine Batterie, eine gegenüber dem Stand der Technik verbesserte Batterie und ein Verfahren zur Herstellung eines Gehäuserahmens zur Verwendung in einer Einzelzelle anzugeben.

Die Aufgabe wird erfindungsgemäß durch eine Einzelzelle mit den Merkmalen des Anspruchs 1 gelöst. Hinsichtlich der Batterie wird die Aufgabe durch die im Anspruch 12 angegebenen Merkmale und hinsichtlich des Verfahrens durch die im Anspruch 13 angegebenen Merkmale gelöst.

Bevorzugte Ausgestaltungen und Weiterbildungen der Erfindung sind in den abhängigen Ansprüchen angegeben.

Eine Einzelzelle, insbesondere eine Flachzelle, umfasst ein aus einem ersten Gehäuseseitenteil, einem zweiten Gehäuseseitenteil und einem Gehäuserahmen gebildetes Gehäuse, in welchem ein Elektrolyt und eine elektrochemisch aktive Elektrodenfolieneinheit angeordnet sind, wobei das Gehäuse eine Überdrucksicherung aufweist.

Erfindungsgemäß weist das erste Gehäuseseitenteil ein zumindest abschnittsweise über eine Länge der Einzelzelle hinausgehendes Gehäuseseitenteilsegment auf, das gegenüber dem ersten Gehäuseseitenteil in Richtung zum Zellinneren abgewinkelt ist und in welchem die Überdrucksicherung angeordnet ist, und im Gehäuserahmen ist in einem Bereich der Überdrucksicherung eine Ventingöffnung eingebracht.

In Einzelzellen einer Batterie, insbesondere einer Lithium-Ionen-Batterie, steigt eine Temperatur und ein Zellinnendruck bei einer Fehlfunktion der Einzelzelle, beispielsweise bei einem Kurzschluss oder einer Überladung, erheblich an, da eine in den Einzelzellen enthaltene elektrochemisch aktive Masse, beispielsweise Nickeloxid, thermisch instabil ist und sich oberhalb einer bestimmten Temperatur in einer exothermen Reaktion irreversibel zersetzt. Durch diesen Zersetzungsvorgang erwärmt sich die Einzelzelle noch weiter und der Zellinnendruck steigt weiter an. Dies kann dazu führen, dass eine solche Einzelzelle bzw. eine mit diesen Einzelzellen bestückte Batterie explodiert und/oder entflammt.

Um dies zu verhindern, ist mittels der erfindungsgemäßen Lösung sichergestellt, dass sich bei Überschreiten eines maximal zulässigen Zellinnendrucks die Überdrucksicherung öffnet, so dass Gase und/oder Flüssigkeiten aus dem Zellinneren kontrolliert entweichen können. Durch die erfindungsgemäße Lösung ist die Überdrucksicherung im Bereich des Gehäuserahmens der Einzelzelle anordbar. Dies ist insbesondere bei als Einzelzellen ausgeführten Flachzellen von großer Bedeutung, da diese in der Batterie mit ihren Gehäuseseitenteilen aneinandergepresst angeordnet sind, so dass die Überdrucksicherung nicht seitlich anordbar ist. Die Überdrucksicherung ist jedoch nicht direkt in den Gehäuserahmen integrierbar, wenn dieser aus thermoplastischem Kunststoff gefertigt ist, da sonst die Überdrucksicherung temperaturabhängig bei unterschiedlichen Zellinnendruckverhältnissen auslöst. Durch die erfindungsgemäße Lösung ist dies bei einer im Bereich des Gehäuserahmens angeordneten Überdrucksicherung verhinderbar, da die Überdrucksicherung im Gehäuseseitenteilsegment angeordnet ist, welches nicht aus einem temperatursensitiven Material gefertigt ist. Dadurch ist eine Auslösung der Überdrucksicherung bei einem vorgegebenen Zellinnendruck unabhängig von einer Temperatur der Einzelzelle sichergestellt. Durch die Ventingöffnung im Gehäuserahmen ist sichergestellt, dass bei Auslösen der Überdrucksicherung Gase und/oder Flüssigkeiten kontrolliert aus dem Zellinneren durch den Gehäuserahmen entweichen können.

Zweckmäßigerweise ist die Überdrucksicherung durch eine vorgegebene Schwächung eines Materials des Gehäuseseitenteilsegmentes gebildet, bevorzugt durch eine Sollbruchstelle. Auf diese Weise ist auf einfach zu realisierende und kostengünstige Weise sichergestellt, dass bei Überschreiten eines maximal zulässigen Zellinnendrucks das Gehäuse an einer vorgegebenen Stelle in vorgegebener Weise aufbricht, so dass Gase und/oder Flüssigkeiten aus dem Zellinneren kontrolliert entweichen können. Dadurch sind eine Explosion und/oder ein Entflammen der Einzelzelle und daraus resultierende Gefährdungen wirkungsvoll verhinderbar.

Das Gehäuseseitenteilsegment ist in einer vorteilhaften Ausführungsform in einem rechten Winkel abgewinkelt. In der erfindungsgemässen Ausführungsform ist das Gehäuseseitenteilsegment mehrfach in Richtung einer inneren Oberflächenseite des ersten Gehäuseseitenteils abgewinkelt. Insbesondere durch die mehrfache Abwinkelung ist das Gehäuseseitenteilsegment auch zur Verankerung des ersten Gehäuseseitenteils im Gehäuserahmen nutzbar, so dass eine Form und Stabilität des Gehäuses auch bei einem erhöhten Zellinnendruck erhalten bleibt. Auf diese Weise ist des Weiteren sichergestellt, dass eine Position und Ausrichtung der Überdrucksicherung konstant bleibt, so dass eine exakte Auslösung der Überdrucksicherung und ein kontrolliertes Entweichen von Gasen und/oder Flüssigkeiten aus dem Zellinneren sichergestellt sind.

Das Gehäuseseitenteilsegment weist vorzugsweise eine Aussparung auf. Dies ist insbesondere bei der beschriebenen mehrfachen Abwinkelung des Gehäuseseitenteilsegments von Vorteil, da durch diese Aussparung bei einer geöffneten Überdrucksicherung ein kontrolliertes Entweichen von Gasen und/oder Flüssigkeiten aus dem Zellinneren durch diese Aussparung hindurch erfolgen kann. Dadurch ist sichergestellt, dass auch bei einem mehrfach abgewinkelten Gehäuseseitenteilsegment ein Entweichen von Gasen und/oder Flüssigkeiten durch das Gehäuseseitenteilsegment nicht behindert oder blockiert ist.

In einer bevorzugten Ausführungsform ist die Überdrucksicherung an einer dem Zellinneren zugewandten Seite des Gehäuserahmens angeordnet, so dass die Ventingöffnung im Gehäuserahmen als Ventingraum nutzbar ist, da Gase und/oder Flüssigkeiten zuerst durch die Überdrucksicherung und danach durch die in Flussrichtung dahinter angeordnete Ventingöffnung im Gehäuserahmen strömen. Durch eine derartige Anordnung ist auch sichergestellt, dass das Sicherheitsventil auch nach einem Einbau der Einzelzelle beispielsweise in ein Batteriegehäuse nicht blockiert ist, da durch die Ventingöffnung im Gehäuserahmen ein Freiraum gebildet ist, so dass ein kontrolliertes Ausbrechen des Gehäuses im Bereich der Überdrucksicherung bei Überschreiten eines maximal zulässigen Zellinnendrucks sichergestellt ist. Des Weiteren ist durch eine geeignete Ausformung dieser Ventingöffnung eine Strömungsrichtung vorgebbar, beispielsweise in Richtung eines Ventingraums in einem Batteriegehäuse. Dadurch ist ein unkontrolliertes Verteilen dieser Gase und/oder Flüssigkeiten verhinderbar.

In einer weiteren Ausführungsform ist die Überdrucksicherung an einer Zellaußenseite des Gehäuserahmens angeordnet. Diese Ausführungsform ist einfacher herstellbar, da hierzu keine mehrfache Abwinkelung des Gehäuseseitenteilsegments erforderlich ist. Allerdings ist bei dieser Ausführungsform sicherzustellen, dass nach einem Einbau der Einzelzelle beispielsweise in ein Batteriegehäuse die Überdrucksicherung nicht blockiert ist.

Das Gehäuseseitenteilsegment ist in vorteilhafter Weise mit dem Gehäuserahmen form-, stoff- und/oder kraftschlüssig verbunden. In einer besonders bevorzugten Ausführungsform ist das Gehäuseseitenteilsegment zumindest teilweise von einem Material des Gehäuserahmens umschlossen. Dadurch ist sichergestellt, dass eine Form und Stabilität des Gehäuses auch bei einem erhöhten Zellinnendruck erhalten bleibt, so dass bei einer Zunahme des Zellinnendrucks eine vorzeitige und unkontrollierte Zerstörung des Gehäuses verhindert ist. Des Weiteren ist dadurch sichergestellt, dass eine Position und Ausrichtung der Überdrucksicherung konstant bleibt, so dass eine exakte Auslösung der Überdrucksicherung und ein kontrolliertes Entweichen von Gasen und/oder Flüssigkeiten aus dem Zellinneren sichergestellt sind.

Um eine Stabilität und Druckfestigkeit des Gehäuses sicherzustellen, sind die Gehäuseseitenteile vorzugsweise mit dem Gehäuserahmen vernietet. In einer weiteren vorteilhaften Ausführungsform sind Randbereiche der Gehäuseseitenteile derart abgewinkelt, dass sie den Gehäuserahmen zumindest teilweise umschließen. Durch derartige Fertigungsvarianten ist ein fester und druckresistenter Verschluss des Gehäuses sichergestellt.

Eine Batterie umfasst eine Mehrzahl elektrisch seriell und/oder parallel miteinander verbundener Einzelzellen, wobei die Einzelzellen, insbesondere Flachzellen, vorzugsweise dicht hintereinander angeordnet und parallel zueinander ausgerichtet sind. Dadurch ist eine optimal Bauraum sparende Anordnung der Einzelzellen erreicht. Da Zellpole der Einzelzellen auf den Gehäuseseitenteilen des Gehäuses liegen, sind die Einzelzellen vorzugsweise durch ein Aneinanderpressen ihrer Gehäuseseitenteile, wobei jeweils zwei miteinander kontaktierte Gehäuseseitenteile eine unterschiedliche Polarität aufweisen, elektrisch seriell miteinander verbindbar. Auf diese Weise ist eine optimale Kontaktierung der Einzelzellen erreichbar und eine Fertigung der Batterie erheblich erleichtert.

In einem erfindungsgemäßen Verfahren zur Herstellung eines Gehäuserahmens mit einer Ventingöffnung zur Verwendung in einer Einzelzelle wird ein erstes Gehäuseseitenteil in einer Spritzgussform angeordnet, welche anschließend verschlossen und mit Kunststoff ausgegossen wird, wobei ein bewegliches Formteil der Spritzgussform an einem abgewinkelten Gehäuseseitenteilsegment in einem Bereich einer Überdrucksicherung angeordnet ist. Auf diese Weise kann auf einfache und kostengünstige Weise in Massenfertigung ein Gehäuserahmen für die Einzelzellen hergestellt und an dem ersten Gehäuseseitenteil befestigt werden. Durch ein zumindest teilweises Eingießen des ersten Gehäuseseitenteils, insbesondere des Gehäuseseitenteilsegments, in den Gehäuserahmen wird eine sehr feste formschlüssige Verbindung erzeugt, wodurch das Gehäuse druckfest verbindbar ist und eine exakte Positionierung der Überdrucksicherung auch bei einem erhöhten Zellinnendruck sichergestellt ist. Mittels des beweglichen Formteils wird eine Ventingöffnung im Gehäuserahmen erzeugt, welche exakt im Bereich der Überdrucksicherung positioniert ist. Da dieses Formteil beweglich ist, ist es nach einem Aushärten des Gehäuserahmens entfernbar und somit das erste Gehäuseseitenteil mit angespritztem Gehäuserahmen problemlos aus der Spritzgussform entnehmbar.

Vorzugsweise wird das Formteil federbelastet an das abgewinkelte Gehäuseseitenteilsegment angepresst. Durch dieses federbelastete Anpressen sind Fertigungstoleranzen des ersten Gehäuseseitenteils und des Gehäuseseitenteilsegmentes ausgleichbar. Dadurch ist sichergestellt, dass das Formteil stets optimal an das Gehäuseseitenteilsegment angepresst ist, so dass eine exakte Positionierung der Ventingöffnung im Gehäuserahmen sichergestellt ist. Dadurch ist sichergestellt, dass kein Material des Gehäuserahmens die Überdrucksicherung bedeckt und blockiert.

Ausführungsbeispiele der Erfindung werden anhand von Zeichnungen näher erläutert.

Dabei zeigen:
- Fig. 1: eine erste perspektivische Darstellung eines ersten Gehäuseseitenteils,
- Fig. 2: eine zweite perspektivische Darstellung eines ersten Gehäuseseitenteils,
- Fig. 3: eine schematische Darstellung eines ersten Gehäuseseitenteils mit Gehäuserahmen in einer Gießform,
- Fig. 4: eine erste perspektivische Darstellung eines ersten Gehäuseseitenteils mit Gehäuserahmen,
- Fig. 5: eine zweite perspektivische Darstellung eines ersten Gehäuseseitenteils mit Gehäuserahmen,
- Fig. 6: eine Explosionsdarstellung einer Einzelzelle,
- Fig. 7: einen vertikalen Schnitt durch eine Einzelzelle im Bereich der Überdrucksicherung, und
- Fig. 8: eine perspektivische Darstellung einer Batterie.

Einander entsprechende Teile sind in allen Figuren mit den gleichen Bezugszeichen versehen.

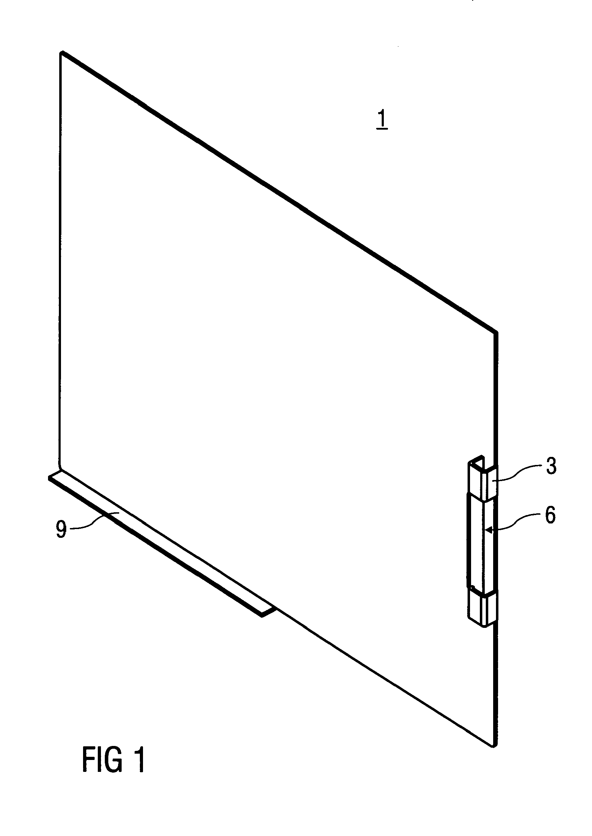

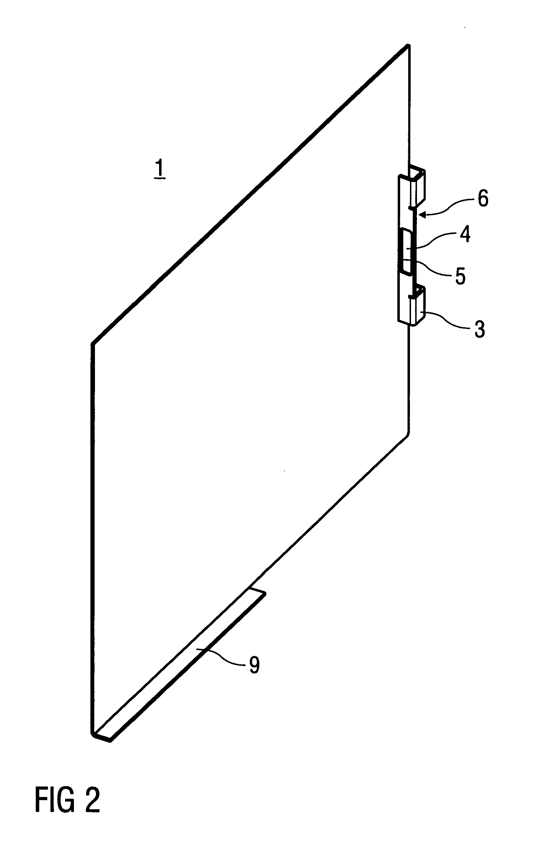

Die Figuren 1 und 2 zeigen perspektivische Darstellungen eines ersten Gehäuseseitenteils 1 einer Einzelzelle 2. Das erste Gehäuseseitenteil 1 weist ein abschnittsweise über eine Länge der Einzelzelle 2 hinausgehendes Gehäuseseitenteilsegment 3 auf, das in der hier dargestellten Ausführungsform dreifach in Richtung einer inneren Oberflächenseite des ersten Gehäuseseitenteils 1 abgewinkelt ist. Dieses Gehäuseseitenteilsegment 3 weist auf einer zu einem Zellinneren gerichteten Fläche eine Überdrucksicherung 4 durch eine vorgegebene Schwächung eines Materials des Gehäuseseitenteilsegments 3 auf. Im hier dargestellten Ausführungsbeispiel ist das Material des Gehäuseseitenteilsegments 3 durch eine ringförmig umlaufende Sollbruchstelle 5 geschwächt. Des Weiteren weist das Gehäuseseitenteilsegment 3 eine Aussparung 6 auf, so dass die Überdrucksicherung 4 nicht von dem Gehäuseseitenteilsegment 3 verdeckt ist. Nach einem Auslösen der Überdrucksicherung 4 können somit Gase und/oder Flüssigkeiten aus dem Zellinneren durch die Überdrucksicherung 4 und durch die Aussparung 6 im Gehäuseseitenteilsegment 3 entweichen.

Des Weiteren weist das erste Gehäuseseitenteil 1 und ebenso ein zweites Gehäuseseitenteil 7 der Einzelzelle 2 auf einer, einer Kühlplatte 8 zugewandten Seite jeweils ein zumindest abschnittsweise über eine Länge der Einzelzelle 2 hinausgehendes Gehäuseseitenteilelement 9 auf, das gegenüber dem jeweiligen Gehäuseseitenteil 1, 7 in Richtung zum Zellinneren abgewinkelt ist. Auf diese Weise ist die Einzelzelle 2 optimal an die Kühlplatte 8 thermisch koppelbar, da eine Verlustwärme der Einzelzelle 2 von den Gehäuseseitenteilen 1, 7 über die abgewinkelten Gehäuseseitenteilelemente 9 auf die Kühlplatte 8 übertragbar ist.

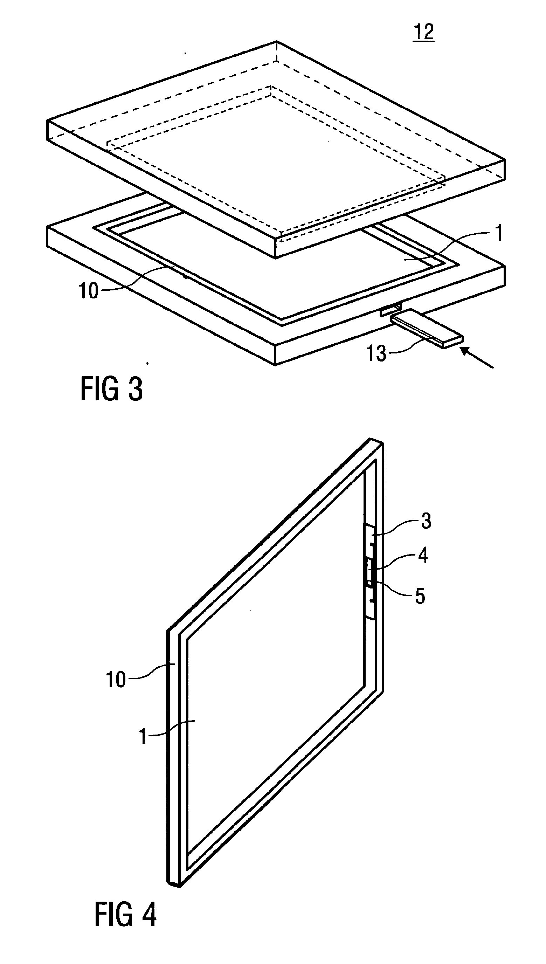

In einem Verfahren zur Herstellung eines Gehäuserahmens 10 mit einer Ventingöffnung 11 zur Verwendung in einer Einzelzelle 2 wird, wie in Figur 3 dargestellt, das erste Gehäuseseitenteil 1 in eine Spritzgussform 12 eingelegt, um den Gehäuserahmen 10 aus einem Kunststoff, bevorzugt aus einem thermoplastischen Kunststoff, zu fertigen und formschlüssig mit dem ersten Gehäuseseitenteil 1, insbesondere mit dem Gehäuseseitenteilsegment 3 zu verbinden. Um die Überdrucksicherung 4 nicht mit dem Gehäuserahmen 10 zu verschließen, wird ein bewegliches Formteil 13 der Spritzgussform 12 an das abgewinkelte Gehäuseseitenteilsegment 3 in einem Bereich der Überdrucksicherung 4 vorzugsweise federbelastet angepresst, bevor der Kunststoff in die Spritzgussform 12 eingespritzt wird. Durch das federbelastete Anpressen wird sichergestellt, dass beispielsweise auch bei auftretenden Fertigungstoleranzen des ersten Gehäuseseitenteils 1 bzw. des Gehäuseseitenteilsegments 3 das Formteil 13 an dem Gehäuseseitenteilsegment 3 im Bereich der Überdrucksicherung 4 anliegt.

Durch dieses Formteil 13 wird verhindert, dass die Überdrucksicherung 4 mit Kunststoff bedeckt wird bzw. vom Gehäuserahmen 10 überdeckt wird und dadurch funktionsuntüchtig wird. Durch Schließen der Spritzgussform 12 und Einspritzen des Kunststoffs in die Spritzgussform 12 wird der Gehäuserahmen 10 ausgeformt, wobei in der hier dargestellten Ausführungsform das Gehäuseseitenteilsegment 3 zumindest teilweise in den Gehäuserahmen 10 eingegossen und somit formschlüssig im Gehäuserahmen 10 verankert wird. Danach wird die Spritzgussform 12 geöffnet, dass Formteil 13 entfernt und das erste Gehäuseseitenteil 1 mit angespritztem Gehäuserahmen 10 aus der Spritzgussform 12 entnommen.

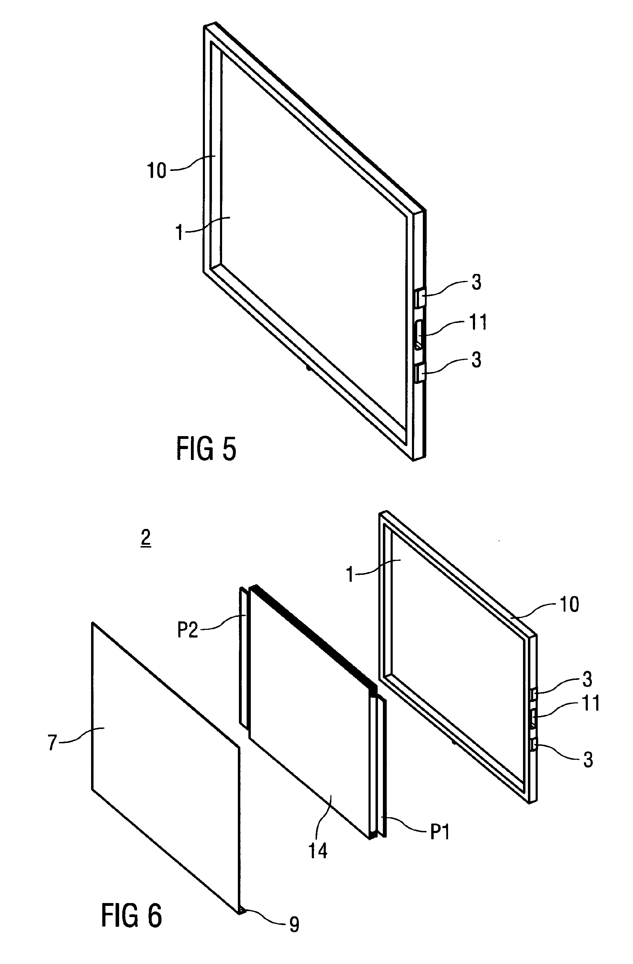

Ein solches erstes Gehäuseseitenteil 1 mit angespritztem Gehäuserahmen 10 aus Kunststoff ist in den Figuren 4 und 5 aus einer ersten und einer zweiten Perspektive dargestellt. Durch das an das Gehäuseseitenteilsegment 3 im Bereich der Überdrucksicherung 4 angepresste Formteil 13 ist im Gehäuserahmen 10 im Bereich der Überdrucksicherung 4 die Ventingöffnung 11 gebildet, durch welche ein kontrolliertes Entweichen von Gasen und/oder Flüssigkeiten aus dem Zellinneren nach einem Auslösen der Überdrucksicherung 4 sichergestellt ist.

Figur 6 zeigt eine Explosionsdarstellung der Einzelzelle 2. Die Einzelzelle 2 umfasst eine elektrochemisch aktive Elektrodenfolieneinheit 14, ein nicht dargestelltes Elektrolyt und ein Gehäuse, gebildet aus dem ersten Gehäuseseitenteil 1 mit angespritztem Gehäuserahmen 10 und dem zweiten Gehäuseseitenteil 7. Zellpole P1, P2 der Elektrodenfolieneinheit 14 sind nach Zusammenfügen der Einzelzelle 2 mit je einem Gehäuseseitenteil 1, 7 kontaktiert, wodurch diese Polkontakte der Einzelzelle 2 bilden. Da in einer Batterie 15 eine Mehrzahl dieser Einzelzellen 2 zu einer optimalen Bauraumnutzung vorzugsweise dicht hintereinander angeordnet und parallel zueinander ausgerichtet sind, sind die Einzelzellen 2 durch ein Aneinanderpressen ihrer Gehäuseseitenteile 1, 7, wobei jeweils zwei miteinander kontaktierte Gehäuseseitenteile 1, 7 eine unterschiedliche Polarität aufweisen, elektrisch seriell miteinander verbindbar. Auf diese Weise ist eine optimale Kontaktierung der Einzelzellen 2 erreichbar und eine Fertigung der Batterie 15 erheblich erleichtert.

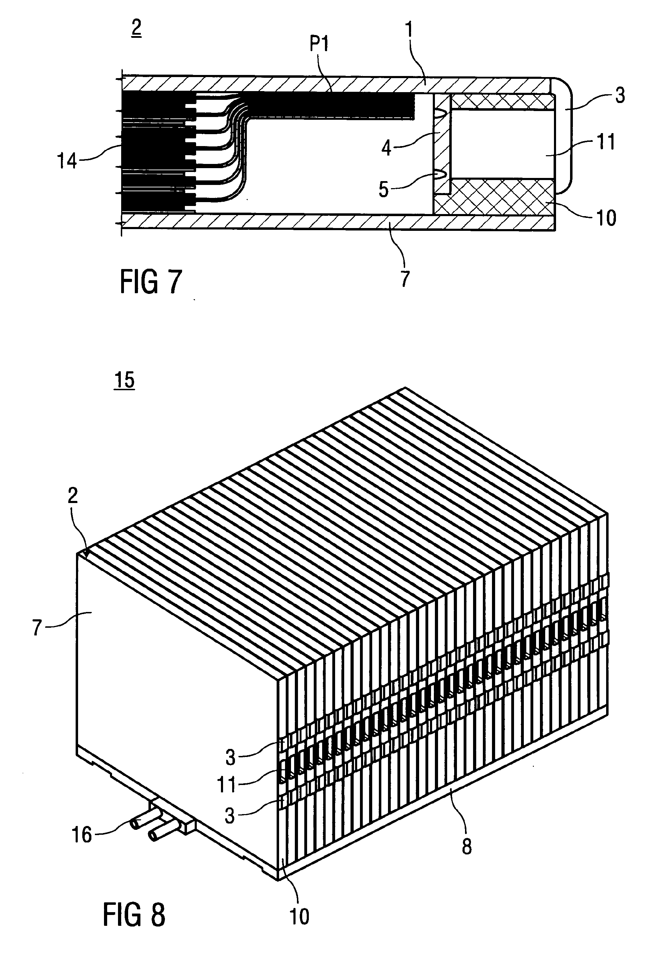

Figur 7 zeigt einen vertikalen Schnitt durch die Einzelzelle 2 im Bereich der Überdrucksicherung 4. Das Gehäuse der Einzelzelle 2 ist durch ein Zusammenfügen der beiden Gehäuseseitenteile 1, 7 und des Gehäuserahmens 10 verschlossen, beispielsweise mittels eines Heißpressverfahrens. Um eine Druckfestigkeit des Gehäuses zu erhöhen, sind die Gehäuseseitenteile 1, 7 am Gehäuserahmen 10 auch beispielsweise alternativ oder zusätzlich vernietbar, zum Beispiel durch aus Gehäuserahmenmaterial gebildete Kunststoffnieten. In einer weiteren, hier nicht dargestellten Ausführungsform sind Randbereiche der Gehäuseseitenteile 1, 7 derart abgewinkelt, dass sie den Gehäuserahmen 10 zumindest teilweise umschließen, wodurch die Druckfestigkeit des Gehäuses ebenfalls steigerbar ist. Ein erster Zellpol P1 der Elektrodenfolieneinheit 14 ist mit dem ersten Gehäuseseitenteil 1 elektrisch kontaktiert, ein weiterer, hier nicht dargestellter Zellpol P2 der Elektrodenfolieneinheit 14 ist mit dem zweiten Gehäuseseitenteil 7 elektrisch kontaktiert.

Durch das dreifach in Richtung der inneren Oberflächenseite des ersten Gehäuseseitenteils 1 abgewinkelte Gehäuseseitenteilsegment 3 ist die Überdrucksicherung 4, welche durch die vorgegebene Schwächung des Materials des Gehäuseseitenteilsegments 3 durch die ringförmig umlaufende Sollbruchstelle 5 gebildet ist, im Bereich einer auf das Zellinnere gerichteten Seite des Gehäuserahmens 10 angeordnet. Das Gehäuseseitenteilsegment 3 ist teilweise in das Material des Gehäuserahmens 10 eingegossen und dadurch formschlüssig mit diesem verbunden. Die Ventingöffnung 11 im Gehäuserahmen 10 ist im Bereich der Überdrucksicherung 4 positioniert. Steigt ein Zellinnendruck der Einzelzelle 2 bei einer Fehlfunktion, beispielsweise bei einem Kurzschluss oder einer Überladung, stark an und überschreitet einen maximal zulässigen Zellinnendruck, so bricht das Gehäuse entlang der Sollbruchstelle 5 auf, wodurch Gase und/oder Flüssigkeiten aus dem Zellinneren kontrolliert entweichen können.

Durch die Ventingöffnung 11 im Gehäuserahmen 10 und die Aussparung 6 im Gehäuseseitenteilsegment 3 können diese Gase und/oder Flüssigkeiten ungehindert aus der Einzelzelle 2 ausströmen, wodurch eine Explosion und/oder ein Entflammen der Einzelzelle 2 vermeidbar sind. Durch die formschlüssige Verbindung des Gehäuserahmens 10 mit dem Gehäuseseitenteilsegment 3 ist sichergestellt, dass sich die Einzelzelle 2 auch bei erhöhtem Zellinnendruck nicht verformt, so dass eine Position und Ausrichtung der Überdrucksicherung 4 in Bezug auf die Ventingöffnung 11 im Gehäuserahmen 10 konstant bleibt, so dass bei einem Auslösen der Überdrucksicherung 4 die Gase und/oder Flüssigkeiten ungehindert über die Ventingöffnung 11 durch den Gehäuserahmen 10 nach außen strömen können. Durch eine geeignete Ausformung dieser Ventingöffnung 11 ist beispielsweise eine Strömungsrichtung vorgebbar, zum Beispiel in Richtung eines Ventingraums in einem Batteriegehäuse. Dadurch ist ein unkontrolliertes Verteilen der Gase und/oder Flüssigkeiten verhinderbar.

Figur 8 zeigt eine perspektivische Darstellung der Batterie 15. In der Batterie 15 sind eine Mehrzahl Einzelzellen 2 zu einer optimalen Bauraumnutzung dicht hintereinander angeordnet und parallel zueinander ausgerichtet. Durch ein Aneinanderpressen ihrer Gehäuseseitenteile 1, 7 sind die Einzelzellen 2 elektrisch seriell miteinander verbindbar, da jeweils zwei miteinander kontaktierte Gehäuseseitenteile 1, 7 eine unterschiedliche Polarität aufweisen. Auf diese Weise ist eine optimale Kontaktierung der Einzelzellen 2 erreichbar und eine Fertigung der Batterie 15 erheblich erleichtert.

Die Einzelzellen 2 sind auf einer Kühlplatte 8 angeordnet, welche von einem Kühlmittel durchströmt und über einen Kühlmittelanschluss 16 beispielsweise an einen Kühlkreislauf eines Fahrzeugs angeschlossen ist. Zur elektrischen Isolation und Verbesserung einer verbesserten Wärmeübertragung ist zwischen den Einzelzellen 2 und der Kühlplatte 8 eine hier nicht dargestellte Wärmeleitfolie angeordnet. Auf diese Weise ist eine Verlustwärme der Einzelzellen 2 auf die Kühlplatte 8 übertragbar und durch das Kühlmittel aus der Batterie 15 abtransportierbar.

Durch die Überdrucksicherung 4 und die im Gehäuserahmen 10 jeder Einzelzelle 2 im Bereich der Überdrucksicherung 4 angeordnete Ventingöffnung 11 können bei einem beispielsweise durch eine Fehlfunktion verursachten Überdruck Gase und/oder Flüssigkeiten aus dem Zellinneren der defekten Einzelzelle 2 kontrolliert entweichen, beispielsweise in das hier nicht dargestellte Batteriegehäuse. Auf diese Weise sind eine Explosion und/oder ein Entflammen der Einzelzelle 2 und daraus resultierende Gefahren vermeidbar.

### Bezugszeichenliste

- 1: erstes Gehäuseseitenteil
- 2: Einzelzelle
- 3: Seitenteilsegment
- 4: Überdrucksicherung
- 5: Sollbruchstelle
- 6: Aussparung
- 7: zweites Gehäuseseitenteil
- 8: Kühlplatte
- 9: Gehäuseseitenteilelement
- 10: Gehäuserahmen
- 11: Ventingöffnung
- 12: Spritzgussform
- 13: Formteil
- 14: Elektrodenfolieneinheit
- 15: Batterie
- 16: Kühlmittelanschluss

- P1, P2: Zellpole

## Patentansprüche

1. Einzelzelle (2) mit einem aus einem ersten Gehäuseseitenteil (1), einem zweiten Gehäuseseitenteil (7) und einem Gehäuserahmen (10) gebildeten Gehäuse, in welchem ein Elektrolyt und eine elektrochemisch aktive Elektrodenfolieneinheit (14) angeordnet sind,
wobei das Gehäuse eine Überdrucksicherung (4) aufweist und das erste Gehäuseseitenteil (1) ein zumindest abschnittsweise über eine Länge der Einzelzelle (2) hinausgehendes Gehäuseseitenteilsegment (3) aufweist, welches Gehäuseseitenteilsegment (3) gegenüber dem ersten Gehäuseseitenteil (1) in Richtung zum Zellinneren abgewinkelt und in ihm die Überdrucksicherung (4) angeordnet ist, wobei ferner in einem seitlichen Bereich des Gehäuses und der Überdrucksicherung (4) eine Ventingöffnung (11) eingebracht ist,
**dadurch gekennzeichnet, dass** die Ventingöffnung (11) in dem Gehäuserahmen (10) angeordnet ist, dass das Gehäuseteilsegment (3) zumindest teilweise in den Rahmen eingegossen ist und dass das Gehäuseseitenteilsegment (3) mehrfach in Richtung einer inneren Oberflächenseite des ersten Gehäuseseitenteils (1) abgewinkelt ist.

2. Einzelzelle (2) nach Anspruch 1,
**dadurch gekennzeichnet, dass** die Überdrucksicherung (4) durch eine vorgegebene Schwächung eines Materials des Gehäuseseitenteilsegmentes (3) gebildet ist.

3. Einzelzelle (2) nach Anspruch 1,
**dadurch gekennzeichnet, dass** die Überdrucksicherung (4) durch eine Sollbruchstelle (5) gebildet ist.

4. Einzelzelle (2) nach Anspruch 1,
**dadurch gekennzeichnet, dass** das Gehäuseseitenteilsegment (3) in einem rechten Winkel abgewinkelt ist.

5. Einzelzelle (2) nach Anspruch 1,
**dadurch gekennzeichnet, dass** das Gehäuseseitenteilsegment (3) eine Aussparung (6) aufweist.

6. Einzelzelle (2) nach Anspruch 1,
**dadurch gekennzeichnet, dass** die Überdrucksicherung (4) an einer dem Zellinneren zugewandten Seite des Gehäuserahmens (10) angeordnet ist.

7. Einzelzelle (2) nach Anspruch 1,
**dadurch gekennzeichnet, dass** die Überdrucksicherung (4) an einer Zellaußenseite des Gehäuserahmens (10) angeordnet ist.

8. Einzelzelle (2) nach Anspruch 1,
**dadurch gekennzeichnet, dass** das Gehäuseseitenteilsegment (3) mit dem Gehäuserahmen (10) form-, stoff- und/oder kraftschlüssig verbunden ist.

9. Einzelzelle (2) nach Anspruch 1,
**dadurch gekennzeichnet, dass** das Gehäuseseitenteilsegment (3) zumindest teilweise von einem Material des Gehäuserahmens (10) umschlossen ist.

10. Einzelzelle (2) nach Anspruch 1,
**dadurch gekennzeichnet, dass** die Gehäuseseitenteile (1, 7) mit dem Gehäuserahmen (10) vernietet sind.

11. Einzelzelle (2) nach Anspruch 1,
**dadurch gekennzeichnet, dass** Randbereiche der Gehäuseseitenteile (1, 7) derart abgewinkelt sind, dass sie den Gehäuserahmen (10) zumindest teilweise umschließen.

12. Batterie (15) mit einer Mehrzahl elektrisch seriell und/oder parallel miteinander verbundener Einzelzellen (2) nach einem der Ansprüche 1 bis 11.

13. Verfahren zur Herstellung eines Gehäuserahmens (10) mit einer Ventingöffnung (11) zur Verwendung in einer Einzelzelle (2) nach einem der Ansprüche 1 bis 11,
**dadurch gekennzeichnet, dass** ein erstes Gehäuseseitenteil (1) in einer Spritzgussform (12) angeordnet wird, welche anschließend verschlossen und mit Kunststoff ausgegossen wird, wobei ein bewegliches Formteil (13) der Spritzgussform (12) an einem abgewinkelten Gehäuseseitenteilsegment (3) in einem Bereich einer Überdrucksicherung (4) angeordnet ist.

14. Verfahren nach Anspruch 13,
**dadurch gekennzeichnet, dass** das Formteil (13) federbelastet an das abgewinkelte Gehäuseseitenteilsegment (3) angepresst wird.

## Claims

1. Individual cell (2), comprising a housing formed from a first housing part (1), a second housing part (7) and a housing frame (10), in which housing an electrolyte and an electrochemically active electrode foil unit (14) are accommodated,
wherein the housing comprises a pressure relief device (4) and the first housing side part (1) comprises a housing side part segment (3), of which at least a section exceeds a length of the individual cell (2), which is angled in the direction of the cell interior relative to the first housing side part (1) and in which the pressure relief device (4) is located, wherein a venting opening (11) is further provided in a lateral region of the housing and the pressure relief device (4),
**characterised in that** the venting opening (11) is located in the housing frame (10), **in that** the housing side part segment (3) is at least partially cast into the frame, and **in that** the housing side part segment (3) is repeatedly angled towards an inner surface side of the first housing part (1).

2. Individual cell (2) according to claim 1,
**characterised in that** the pressure relief device (4) is represented by a predetermined weakening of a material of the housing side part segment (3).

3. Individual cell (2) according to claim 1,
**characterised in that** the pressure relief device (4) is represented by a predetermined breaking point.

4. Individual cell (2) according to claim 1,
**characterised in that** the housing side part segment (3) is angled in a right angle.

5. Individual cell (2) according to claim 1,
**characterised in that** the housing side part segment (3) has a recess (6).

6. Individual cell (2) according to claim 1,
**characterised in that** the pressure relief device (4) is located on a side of the housing frame (10) which faces the interior of the cell.

7. Individual cell (2) according to claim 1,
**characterised in that** the pressure relief device (4) is located on a cell outer side of the housing frame (10).

8. Individual cell (2) according to claim 1,
**characterised in that** the housing side part segment (3) is joined to the housing frame (10) positively, by adhesive force and/or non-positively.

9. Individual cell (2) according to claim 1,
**characterised in that** the housing side part segment (3) is at least partially enclosed by a material of the housing frame (10).

10. Individual cell (2) according to claim 1,
**characterised in that** the housing side parts (1, 7) are riveted to the housing frame (10).

11. Individual cell (2) according to claim 1,
**characterised in that** edge regions of the housing side parts (1, 7) are angled in such a way that they at least partially enclose the housing frame (10).

12. Battery (15) comprising a plurality of individual cells (2) according to any of claims 1 to 11, which are electrically connected in series and/or in parallel.

13. Method for producing a housing frame (10) with a venting opening (11) for use in an individual cell (2) according to any of claims 1 to 11,
**characterised in that** a first housing side part (1) is placed in an injection mould (12), which is then closed and filled with a plastic material, wherein a movable mould part (13) of the injection mould (12) is located on an angled housing side part segment (3) in a region of a pressure relief device (4).

14. Method according to claim 13,
**characterised in that** the mould part (13) is pressed against the angled housing side part segment (3) in a spring-loaded manner.

## Revendications

1. Élément individuel (2) comprenant un boîtier contenant une première partie latérale de boîtier (1), une seconde partie latérale de boîtier (7) et un cadre de boîtier (10), dans lequel sont disposés un électrolyte et une unité de feuille d'électrode active électrochimiquement (14), le boîtier présentant une soupape de surpression (4) et la première partie latérale de boîtier (1) présentant un segment de partie latérale de boîtier (3) faisant saillie au moins à certains endroits sur une longueur de l'élément individuel (2), ledit segment de partie latérale de boîtier (3) est coudé par rapport à la première partie latérale de boîtier (1) en direction de l'espace intérieur de l'élément et la soupape de surpression (4) est disposé dedans, plus loin dans une zone latérale du boîtier et de la soupape de surpression (4) est disposée une ouverture de soupape (11), **caractérisé en ce que** l'ouverture de soupape (11) est aménagée dans le cadre de boîtier (10), **en ce que** le segment de partie de boîtier (3) est coulé au moins partiellement dans le cadre et **en ce que** le segment de partie latérale de boîtier (3) est coudé à plusieurs endroits dans la direction d'un côté intérieur de surface de la première partie latérale de boîtier (1).

2. Élément individuel (2) selon la revendication 1, **caractérisé en ce que** la soupape de surpression (4) est formée par un affaiblissement prédéfini d'un matériau du segment de partie latérale de boîtier (3).

3. Élément individuel (2) selon la revendication 1, **caractérisé en ce que** la soupape de surpression (4) est formée par un point de rupture (5).

4. Élément individuel (2) selon la revendication 1, **caractérisé en ce que** le segment de partie latérale de boîtier (3) est coudé selon un angle droit.

5. Élément individuel (2) selon la revendication 1, **caractérisé en ce que** le segment de partie latérale de boîtier (3) présente un évidemment (6).

6. Élément individuel (2) selon la revendication 1, **caractérisé en ce que** la soupape de surpression (4) est disposée sur un côté du cadre de boîtier (10) orienté vers l'espace intérieur d'élément.

7. Élément individuel (2) selon la revendication 1, **caractérisé en ce que** la soupape de surpression (4) est disposée sur un côté extérieur d'élément du cadre de boîtier (10).

8. Élément individuel (2) selon la revendication 1, **caractérisé en ce que** le segment de partie latérale de boîtier (3) est relié par complémentarité de forme, par liaison de matière et/ou de force au cadre de boîtier (10).

9. Élément individuel (2) selon la revendication 1, **caractérisé en ce que** le segment de partie latérale de boîtier (3) est entouré au moins partiellement par un matériau du cadre de boîtier (10).

10. Élément individuel (2) selon la revendication 1, **caractérisé en ce que** les parties latérales de boîtier (1, 7) sont rivetées au cadre de boîtier (10).

11. Élément individuel (2) selon la revendication 1, **caractérisé en ce que** les zones marginales des parties latérales de boîtier (1, 7) sont coudées de telle manière qu'elles entourent au moins en partie le cadre de boîtier (10).

12. Batterie (15) comprenant une pluralité d'éléments individuels (2) reliés les uns aux autres électriquement en série et/ou en parallèle selon l'une quelconque des revendications 1 à 11.

13. Procédé de production d'un cadre de boîtier (10) comprenant une ouverture de soupape (11) destinée à être utilisée dans un élément individuel (2) selon l'une quelconque des revendications 1 à 11, **caractérisé en ce qu'**une première partie latérale de boîtier (1) est disposé dans un moule de moulage par injection, lequel sera ensuite fermé et coulé en matière synthétique, une partie de moule (13) mobile du moule de moulage par injection (12) étant disposée sur un segment de partie latérale de boîtier (3) coudé dans une zone d'une soupape de surpression (4).

14. Procédé selon la revendication 13, **caractérisé en ce que** la partie de moule (13) est pressée par la sollicitation d'un ressort contre le segment de partie latérale de boîtier (3).
